Europäisches Patentamt

European Patent Office

Office européen des brevets

(11) Veröffentlichungsnummer: **0 128 488**
**A1**

# EUROPÄISCHE PATENTANMELDUNG

(21) Anmeldenummer: 84106301.9

(22) Anmeldetag: 01.06.84

(51) Int. Cl.³: **A 01 D 43/10**, A 01 D 82/00

(30) Priorität: 08.06.83 CH 3151/83

(43) Veröffentlichungstag der Anmeldung: 19.12.84
Patentblatt 84/51

(84) Benannte Vertragsstaaten: **AT DE FR IT**

(71) Anmelder: **Kurt Schwaninger AG, Land- und Kommunalmaschinen, Neunkircherstr. 1059, CH-8215 Hallau (CH)**

(72) Erfinder: **Schwaninger, Kurt, Neunkircherstrasse 1059, CH-8215 Hallau (CH)**

(74) Vertreter: **Blum, Rudolf Emil Ernst et al, c/o E. Blum & Co Patentanwälte Vorderberg 11, CH-8044 Zürich (CH)**

(54) Konditionierungsvorrichtung für Mähgeräte.

(57) Zum Aufbereiten des geschnittenen Mähgutes ist oberhalb eines Mähbalkens (9) ein nach vorn rotierendes Schlagorgan angeordnet, das eine Vielzahl von Streifen (5) aufweist, die in Reihen an einer rotierbaren Walze (2) befestigt sind. Die Länge der Streifen (5) ist so bemessen, daß die geschnittenen Halme von ihnen gegen eine Arbeitsfläche (8), die vom hinteren Mähbalkenteil gebildet ist, geschlagen werden. Die durch das Erfassen verbundene Knickung und die nachfolgende Beaufschlagung im Bereich des Mähbalkens bewirkt eine teilweise Zerstörung der Oberflächenwachsschicht der Halme, wodurch die Verdunstung und damit die Trocknung des Mähgutes gefördert wird.

0128488

- 1 -

Konditionierungsvorrichtung für
Mähgeräte

----------------------------------

Die Erfindung betrifft eine Konditionierungsvorrichtung für Mähgeräte zum Aufbereiten des Mähgutes. Konditionierungsvorrichtungen dieser Art sind
insbesondere für Kreiselmäher bereits bekannt, wozu
beispielsweise auf die Publikationen CH-PS 541 271
und CH-PS 592 401 verwiesen wird. Dabei ist hinter bzw.
über den Mähtrommeln ein gegen die Fahrtrichtung rotierendes Aufnahmeorgan in Form eines Fingerrotors
oder dgl. angeordnet, der das Mähgut aufnimmt und über
einen Förderkanal nach hinten transportiert. Durch die
mechanische Einwirkung wird die Wachsschicht an den
Halmen aufgeschlossen, was die Verdunstung fördert
und die Trocknungszeit stark reduziert. Die bekannten
Anordnungen haben den Nachteil aufwendiger Konstruktion. Sie lassen sich nicht mit bereits bestehenden
Mähgeräten kombinieren und sind bisher auf die Verwendung mit Kreiselmähern beschränkt geblieben. Es
stellt sich die Aufgabe, eine Konditionierungsvorrichtung einfacher Ausgestaltung zu schaffen, die
die oben genannten Beschränkungen nicht aufweist und
die insbesondere auch bei als Mähbalken ausgebildeten

Sb/str
30.5.1984                                    EU 1210

Mähgeräten eine Konditionierung des Mähgutes gestatten.

Diese Aufgabe wird erfindungsgemäss durch eine Konditionierungsvorrichtung gelöst, welche ein Schlagorgan mit einer Vielzahl von mindestens im Endbereich flexiblen, länglichen Schlagelementen aufweist, die über den Umfang und die Breite einer rotierbaren Achse verteilt angeordnet sind und mit einer unterhalb dieser Achse und in Mährichtung hinter den Mähorganen angeordneten Arbeitsfläche zusammenwirken, um das über diese Fläche geführte Mähgut zu beaufschlagen.

Dabei ist die Drehrichtung der Achse vorzugsweise derart, dass die Schlagelemente das Mähgut auf der Arbeitsfläche nach hinten wegführen.

Bei einem bevorzugten Ausführungsbeispiel der Erfindung für Balkenmähgeräte ist die Arbeitsfläche vom hinteren Mähbalkenbereich gebildet, wobei das Schlagorgan im wesentlichen parallel zum Mähbalken über dessen hinterem Bereich angeordnet ist.

Dabei rotiert das Schlagorgan in der Regel in Mährichtung, so dass das Mähgut nach hinten über den Balken weggeführt und gelockert wird, nachdem es auf dem Balken durch die Schlagelemente aufgeschlossen worden ist.

Vorzugsweise ist das Schlagorgan lösbar am Mähgerät, insbesondere am Mähbalken, befestigt, so dass es bei Nichtbedarf, etwa zum täglichen Einbringen des Frischfutters, leicht entfernbar ist.

Die beanspruchte Konditionierungsvorrichtung weist gegenüber den erwähnten bekannten Geräten unter anderem den Vorteil auf, dass jegliche Zerkleinerungswirkung unterbleibt. Das beaufschlagte Mähgut wird von den Schlagelementen geknickt und auf der Arbeitsfläche lokal gepresst, so dass die die Verdunstung hemmende Oberflächenwachsschicht der Halme aufgeschlossen wird.

- 3 -

0128488

Nachfolgend wird ein Ausführungsbeispiel der Erfindung anhand der beiliegenden Zeichnung erläutert. Darin zeigen:

Fig. 1 eine perspektivische Gesamtansicht der Konditionierungsvorrichtung an einem Balkenmähgerät,

Fig. 2 eine schematische Ansicht in Kängsrichtung der rotierbaren Achse, und

Fig. 3 eine Detailansicht zur Illustration der Anbringung der Schlagelemente.

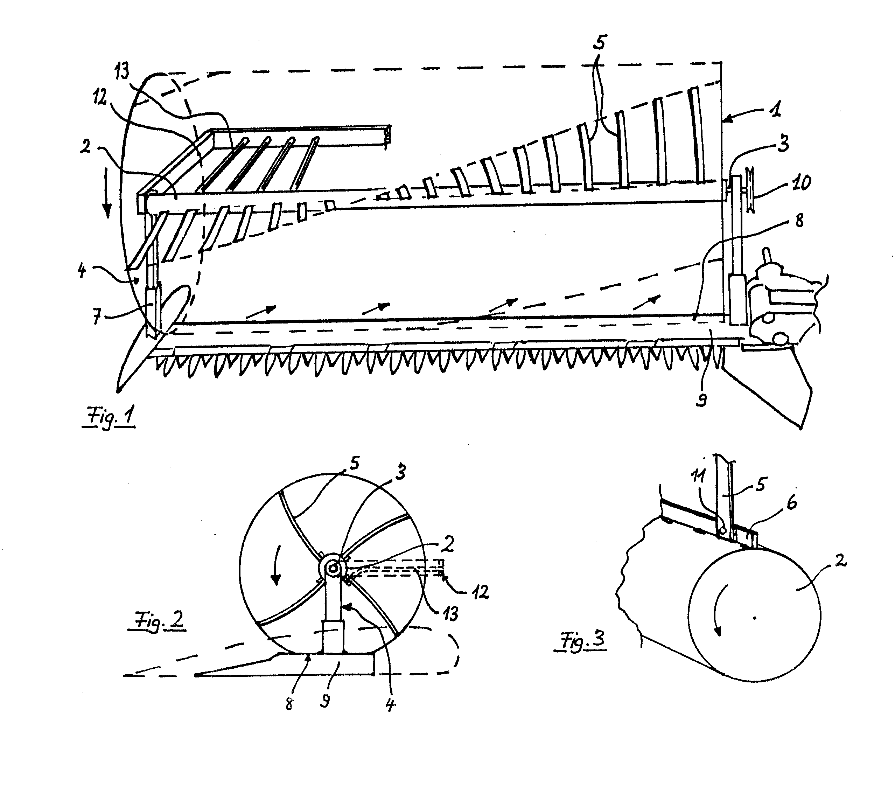

Die in Fig. 1 übersichtsmässig dargestellte Konditionierungsvorrichtung 1 weist eine rotierbare Achse 2 auf, die als Walze ausgebildet ist. Die Walze besteht aus einem Rohr, das seitlich mit Achszapfen 3 versehen ist, die in Lagern an seitlichen Trägern 4 drehbar gehalten sind.

An der Walze 2 sind die flexiblen Schlagelemente 5 angeordnet, die im beschriebenen Ausführungsbeispiel als Streifen aus gewebeverstärktem Kunststoff mit den Massen 30 x 4 x 500 mm ausgebildet sind. Insgesamt sind über den Umfang der Walze 2 vier Reihen solcher Streifen vorgesehen. Pro Reihe sind ca. 15 bis 20 Streifen angeordnet. Die Streifen der jeweils darauffolgenden Reihe können seitlich so versetzt sein, dass ihre Bahn im Bereich der Lücken der vorangehenden Reihe liegt.

Die einzelnen Streifenreihen verlaufen schraubenlinienförmig an der Walze 2, was im Betrieb das Mähgut nach der Innenseite, d.h. der gegen das Antriebsfahrzeug gerichteten Seite hin verschiebt, die in Fig. 1 rechts liegt.

Als Befestigung der Streifen sind schraubenlinienförmig über die Walze verlaufende Stege 6 (Fig.3) vorgesehen, die an der Walzenoberfläche angeschweisst sind. Daran sind die Streifen 5 auf der in Drehrich-

tung vorderen Seite mittels Sichrauben 11 auswechselbar angebracht, was die Gefahr des Losreissens der Streifen im Betrieb herabsetzt.

Die Träger 4, an denen die Walze gelagert ist, sind derart ausgestaltet, dass die Konditionierungsvorrichtung 1 entfernbar ist und besteht zu diesem Zweck aus einem am Mähbalken fest angebrachten Rohr 7, in welches entsprechende Gegenstücke einschiebbar sind. Nicht dargestellt ist die Feststellvorrichtung, welche vorzugsweise als Verriegelung oder dgl. ausgebildet ist. Damit ist es auf einfache Art möglich, die Konditionierungsvorrichtung bei Nichtgebrauch zu entfernen, also etwa beim Mähen von Frischfutter.

Die Streifen 5 wirken, wie bereits ausgeführt, mit einer Arbeitsfläche 8 zusammen. Diese wird beim vorliegenden Ausführungsbeispiel durch den hinteren Bereich des Mähbalkens 9 gebildet. Es kann hierfür aber auch ein separates Blech vorgesehen sein. Die in der dargestellten Drehrichtung rotierenden Schlagelemente 5 ergreifen die geschnittenen Halme, knicken diese, schlagen sie gegen die Arbeitsfläche 8 und führen sie seitlich nach hinten ab. Deshalb entspricht der Abstand zwischen der Walzenoberfläche und der Arbeitsfläche mindestens der Länge der Streifen 5, in vorliegendem Fall also mindestens 50 cm. Die obere Grenze der Streifenlänge ergibt sich durch den Umstand, dass die Streifen beim Betrieb nicht mit dem Mähwerk in Berührung kommen sollen.

Um zu verhindern, dass Grashalme durch die Schlagorgane 5 ergriffen und um die Achse 2 gewickelt werden, ist auf der hinteren Seite ein Rahmen 12 angeordnet, der Gitterstäbe 13 trägt. Die Schlagorgane 5 bewegen sich durch diese Gitterstäbe 13 nach oben, wobei erfasste Halme abgestreift werden. Der Rahmen 12, der auch nach der Vorderseite hin fortgesetzt werden kann, dort allerdings ohne die Gitterstäbe, dient zugleich als Schutz vor unbeabsichtigtem Aufenthalt im Bereich der Schlagorgane 5, welche indessen auch ohne Schutz wegen ihrer Flexibilität keine verletzenden Einwirkungen auf Körperteile haben. Falls erwünscht, kann über dem Schlagorgan ohne weiteres eine Abdeckung vorgesehen sein, die am genannten Rahmen befestigt sein kann.

Der Antrieb der Konditionierungsvorrichtung 1 erfolgt vorzugsweise mittels Riemen durch den Mähmaschinenantrieb (nicht im Detail dargestellt). Zu diesem Zweck ist auf der Antriebsseite eine Riemenscheibe 10 angeordnet, wobei die Drehrichtung, wie bereits erwähnt, so gewählt ist, dass die geschnittenen Halme zwischen der Walze 2 und der Arbeitsfläche 8 nach hinten transportiert werden. Die Konditionierungsvorrichtung 1 ist zusammen mit dem Mähbalken 9 anhebbar, womit insbesondere ohne Beeinträchtigung des Betriebs Bodenunebenheiten überfahren werden können.

Die Anordnung der dargestellten Konditionierungsvorrichtung erfolgt vorzugsweise an Mähbalken, ist jedoch nicht darauf beschränkt. Statt der durch den Nähbalken gebildeten Arbeitsfläche ist dann ein entsprechend angeordnetes Blech vorzusehen. Anstelle von gewebeverstärktem Kunststoff kann für die Streifen auch Gummi oder Leder verwendet werden.

Patentansprüche

---------------------------------

1. Konditionierungsvorrichtung für Mähgeräte zum Aufbereiten des Mähgutes, gekennzeichnet durch ein Schlagorgan mit einer Vielzahl von mindestens im Endbereich flexiblen, länglichen Schlagelementen (5), die über den Umfang und die Breite einer rotierbaren Achse (2) verteilt angeordnet sind und mit einer unterhalb dieser Achse und in Mährichtung hinter den Mähorganen angeordneten Arbeitsfläche (8) zusammenwirken, um das über diese Fläche geführte Mähgut zu beaufschlagen.

2. Konditionierungsvorrichtung nach Anspruch 1, dadurch gekennzeichnet, dass die Drehrichtung der Achse (2) derart ist, dass die Schlagelemente (5) das Mähgut auf der Arbeitsfläche (8) nach hinten wegführen.

3. Konditionierungsvorrichtung nach einem der vorangehenden Ansprüche, dadurch gekennzeichnet, dass die rotierbare Achse (2) von einer Walze gebildet ist, an deren Umfang die Schlagelemente (5) befestigt sind, wobei jedes Schlagelement aus einem flexiblen Streifen besteht, dessen Länge mindestens dem Abstand zwischen Walzenoberfläche und Arbeitsfläche (8) entspricht.

4. Konditionierungsvorrichtung nach einem der vorangehenden Ansprüche, dadurch gekennzeichnet, dass die Schlagelemente (5) im wesentlichen in längs der Achsrichtung verlaufenden Reihen und voneinander beabstandet angeordnet sind, wobei die Schlagelemente aufeinanderfolgender Reihen gegeneinander seitlich versetzt sind.

5. Konditionierungsvorrichtung nach Anspruch 4, dadurch gekennzeichnet, dass die Reihen schräg  zur Achsrichtung verlaufen zur Unterstützung

0128488

der Mahdbildung.

6. Konditionierungsvorrichtung nach einem der vorangehenden Ansprüche, dadurch gekennzeichnet, dass die Schlagelemente (5) aus gewebeverstärkten Kunststoffstreifen gebildet sind.

7. Konditionierungsvorrichtung nach einem der vorangehenden Ansprüche für Balkenmähgeräte, dadurch gekennzeichnet, dass die Arbeitsfläche (8) vom hinteren Mähbalkenbereich gebildet ist, wobei das Schlagorgan im wesentlichen parallel zum Mähbalken über dessen hinterem Bereich angeordnet ist.

8. Konditionierungsvorrichtung nach Anspruch 7, dadurch gekennzeichnet, dass mindestens das Schlagorgan zur lösbaren Anbringung am Mähbalken ausgebildet ist.

9. Konditionierungsvorrichtung nach einem der vorangehenden Ansprüche, gekennzeichnet durch Antriebsorgane, die mit dem Mähgeräteantrieb verbindbar sind.

10. Konditionierungsvorrichtung nach einem der vorangehenden Ansprüche, dadurch gekennzeichnet, dass mindestens auf der in Mährichtung hinteren Seite des Schlagorgans etwa auf Achshöhe ein Rahmen (12) mit daran befestigten Gitterstäben (13) angeordnet ist, durch welche sich die Schlagelemente hindurch bewegen.

Fig. 1

Fig. 2

Fig. 3

1 / 1

0128488

Europäisches Patentamt

# EUROPÄISCHER RECHERCHENBERICHT

| | EINSCHLÄGIGE DOKUMENTE | | EP 84106301.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | GB - A - 1 322 165 (NAT. RESEARCH DEVELOPMENT CORPORATION) <br><br> * Fig. 1-5; Seite 3, Zeile 128 - Seite 4, Zeile 7 * <br> -- | 1-5,7 | A 01 D 43/10 <br> A 01 D 82/00 |
| X | GB - A - 2 075 816 (NAT. RESEARCH DEVELOPMENT CORPORATION) <br><br> * Fig. 8(b), 8(c); Seite 2, Zeilen 87-107 * <br> -- | 1-4,7, 10 | |
| X | AT - B - 263 432 (ALMABAL GMBH) <br><br> * Fig. 1-3; Seite 1, Zeilen 12-14 * <br> -- | 1-4,9 | |
| D,A | CH - A - 592 401 (BUCHER GOYER AG) <br><br> * Fig. * <br> -- | 1-3,7, 10 | RECHERCHIERTE SACHGEBIETE (Int. Cl. ³) |
| D,A | CH - A - 541 271 (BUCHER GUYER AG) <br><br> * Fig. 1,2 * <br> ---- | 1 | A 01 D 43/00 <br> A 01 D 82/00 |

Der vorliegende Recherchenbericht wurde für alle Patentansprüche erstellt.

| Recherchenort | Abschlußdatum der Recherche | Prüfer |
|---|---|---|
| WIEN | 30-08-1984 | SCHWAB |